# EUROPEAN PATENT SPECIFICATION

(11) **EP 0 395 173 B1**
(45) Date of publication and mention of the grant of the patent: **13.10.1993**
(21) Application number: 90201041.2
(22) Date of filing: 26.04.1990
(51) Int. Cl.: A01C 23/02

(54) **Device for bringing liquids, as in particular liquid manure, below the surface into the ground**
Vorrichtung, um Flüssigkeiten, insbesondere Gülle, im Boden unterzubringen
Appareil pour introduire les liquides, notamment engrais liquide sous la surface du sol

(30) Priority: 27.04.1989 NL 8901056
(43) Date of publication of application: 31.10.1990
(73) Proprietor: RUMPTSTAD INDUSTRIES B.V., NL-3243 LA Stad aan 't Haringvliet (NL)
(72) Inventor: Van Burg, Jacob Johannes, NL-3244 AH Nieuwe Tonge (NL)
(74) Representative: Lips, Hendrik Jan George, Ir.

(56) References cited:
- FR-A- 2 512 629
- US-A- 3 500 937
- US-A- 4 404 918

## Description

Device for bringing liquids, as in particular liquid manure, below the surface into the ground.

The invention relates to a device for bringing liquids, such as in particular liquid manure, below the surface into the ground, said device comprising at least one injection tube which during operation of the device is substantially vertical positioned and is provided with a substantially horizontal cutting plate or a such like implement at its lower end, said device further comprising a swinging arm the one end of which is pivotally connected to the injecting tube and the other end of which is provided with at least one wheel positioned at a distance from said injection tube for closing the furrow formed by said injection tube, said arm being spring loaded such that said wheel is pressed vertically downward during operation of the device.

Such a device is known by NL-A-85 01348 and the arm of it is provided with one wheel to shut of the furrow made by the injection tube and the cutting plate, said wheel being rotatable around a horizontal shaft. Because the wheel has to compress the ground on either side of the furrow it is having a considerable width. In practice, however, it appears that closing of the furrow does not always take place sufficiently. As a result of this volatile components may evade, which components will cause odour annoyance and are environmental unkind.

Now the invention aims to raise these objections and to provide a device which takes care for a better closing of the furrow.

According to the invention this is obtaianed because said arm is provided with two wheels which are rotatably mounted on two separate shafts such that said wheels are in a V-shaped position and present at either side of a vertical plane extending through the center line of the injection tube such that near the lowest points of the wheels the maximum distance between the outside edges of said wheels is up to six times the width of the injection tube in the related direction to shut the furrow only at its upper end.

By mounting the two wheels in a V-shaped position the ground is positively pushed towards the furrow to close the upper end of this.

It is advantageous that the wheels enclose an angle of 30 up to 120°.

Preferably near the lowest points of the wheels the maximum distance between the inside edges of said wheels will be from zero up to four times the width of the injection tube in the related direction.

The width of the wheels and the position which they are taking in respect of each other will depend on the type of ground in which the liquid manure is brought. Generally speaking in case of heavy soil one may use wheels with a smaller width than in case of light soil. It is, however, very important that the furrow is only closed near its upper end and not at a place lying too low. In the last case the liquid which was brought into the furrow can be pressed upwardly again so that the volatile components might evade of it.

In particular it can be provided, that the wheels, as seen in plan view, are enclosing an angle such that they are in a V-shaped position, the rearward portions, as seen in the direction of movement being at the smallest distance from each other.

In this way the wheels will exert a force on the ground lying beside the furrow directed towards the center line of the furrow. This will contribute to a still better closing of the furrow.

As seen in plan view the angle enclosed by the wheels may lie between 0° and 40°.

The related angle can be adjustable because e.g. the shafts of the wheels are connected to a strip which in respect of the swinging arm is adjustable and can be fixed in a vertical plane.

The invention is further described by means of an embodiment shown in the drawing, in which:
fig. 1 shows a perspective view of a part of an injection tube and the swinging arm with pressing wheels connected to it;
fig. 2 shows a perspective rear view of the device of Fig. 1;
Fig. 3 shows a plan view of the device of Fig. 1; and
Fig. 4 schematically shows a cross-section over a furrow made into the ground, which furrow is closed by the wheels near its upper end.

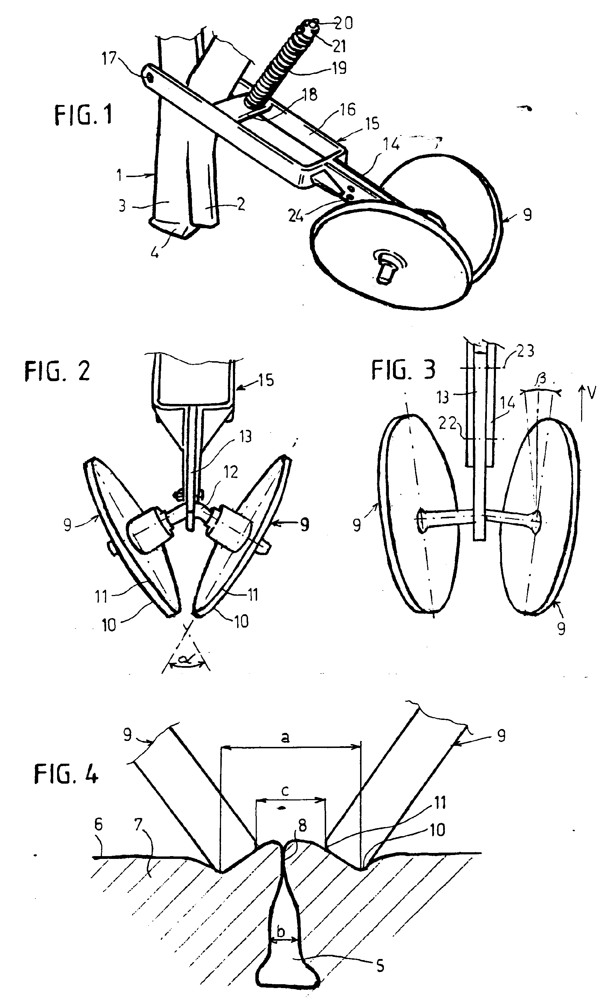

Fig. 1 shows the injection tube 1 which can be shaped by a tubular portion 2, the vertical cutting plate 3 and the horizontal cutting plate 4. The cutting plate 4 can also be replaced by another the ground displacing implement.

By moving the injection tube 1 through the ground a furrow 5 is formed, such as this is partly shown in Fig. 4. The furrow 5 then, however, is totally open till the surface 6 of the ground 7.

For closing the upper end 8 of the furrow use is made of the wheels 9.

The wheels 9 are enclosing an angle α, see Fig. 2, which will lie between 30° en 120°. The distance a between the outside edges 10 of the wheels 9 will not be larger than six times the width b of the furrow at the position where the wheels are engaging the ground. The width b substantially will be equal to the largest width of the injection tube 1 in the related direction.

The width of the wheels 9 can be chosen such that the distance c between the inside edges 11 of the wheels 9 is not more than four times the width b of the furrow 5. So the inside edges 11 of the wheels may almost engage each other. As seen in plan view, as shown in Fig. 3, the wheels 9 will enclose an angle β between 0° and 40°. In this case the wheels are moving in the direction indicated by means of the arrow V.

The shafts 12 of the wheels are provided on a strip 13 which is enclosed by two strips 14 forming part of the swinging arm 15 which further is formed by a bow 16, which by means of the shaft 17 is pivotably connected with the upper part of the injection tube 1.

Further the bow 16 is provided with a plate 18 against which a spring 19 is pressed being present on a rod 20, the lower end of which is connected to the injection tube 1 in a not further indicated way. The tension of the spring 19 can be changed by moving an adjustable ring 21 provided on the upper end of the rod 20.

The strip 13 is connected to the strips 14 by means of bolts 22 and 23, see Fig. 3. The strip 13 can take various positions in respect of the strips 14, because in the strips 14 various bores 24 are provided. By this the strip 13 can be pivoted around the bolts 22 and by applying the bolt 23 in one of the bores 24 in the strip 14 the position of the strip 13 in the vertical plane can be changed. Obviously more than two bores 24 can be applied in the strips 14 and e.g. also the strip 13 can be provided with two or more bores to obtain a greater number of adjusting possibilities of the wheels 9.

Obviously only a possible embodiment of the device according to the invention is shown in the drawing and is described above, it being possible to apply many modifications without leaving the scope of the invention as defined by the claims.

## Claims

1. Device for bringing liquids, such as in particular liquid manure, below the surface (6) into the ground (7), said device comprising at least one injection tube (1) which during operation of the device is substantially vertical positioned and is provided with a substantially horizontal cutting plate (4) or a such like implement at its lower end, said device further comprising a swinging arm (15) the one end of which is pivotally connected to the injection tube (1) and the other end of which is provided with at least one wheel (9) positioned at a distance from said injection tube (1) for closing the furrow formed by said injection tube (1), said arm being spring loaded (19) such that said wheel is pressed vertically downward during operation of the device, characterized in that said arm is provided with two wheels (9) which are rotatably mounted on two separate shafts (12) such that said wheels (9) are in a V-shaped position and present at either side of a vertical plane extending through the center line of the injection tube (1) such that near the lowest points of the wheels the maximum distance (a) between the outside edges of said wheels (9) is up to six times the width (b) of the injection tube (1) in the related direction to shut the furrow only at its upper end (8).

2. Device according to claim 1, characterized in that the wheels (9) are enclosing an angle (α) of 30° up to 120°.

3. Device according to claim 1 or 2, characterized in that near the lowest points of the wheels (9) the maximum distance (c) between the inside edges (11) of said wheels (9) is from zero up to four times the width (b) of the injection tube (1) in the related direction.

4. Device according to one of the preceding claims, characterized in that the wheels (9), as seen in plan view, are enclosing an angle (B) such that they are in a V-shaped position, the rearward portions, as seen from the injection tube, being at the smallest distance from each other.

5. Device according to claim 4, characterized in that the angle (β) which, as seen in plan view, the wheels (9) are enclosing, is lying between 0° and 40°.

6. Device according to claim 4 or 5, characterized in that the shafts (12) of the wheels (9) are connected to a strip (13) which in respect of the swinging arm (15) is adjustable and can be fixed in a vertical plane.

## Patentansprüche

1. Vorrichtung zum Einbringen von Flüssigkeiten, beispielsweise insbesondere Jauche, unter die Oberfläche (6) in den Erdboden (7) mit wenigstens einem Einspritzrohr (1), das während des Betriebs der Vorrichtung im wesentlichen vertikal positioniert und an seinem unteren Ende mit einer im wesentlichen horizontalen Schneidplatte (4) oder einem ähnlichen Werkzeug versehen ist, und mit einem Schwingarm (15), dessen eines Ende schwenkbar mit dem Einspritzrohr (1) verbunden und dessen anderes Ende mit wenigstens einem in einem Abstand vom Einspritzrohr (1) angeordneten Rad (9) zum Schließen der vom Einspritzrohr (1) gebildeten Furche versehen ist, wobei der Arm derart federbelastet (19) ist, daß das Rad während des Betriebs der Vorrichtung vertikal nach unten gedrückt wird,
**dadurch gekennzeichnet,**
daß der Arm mit zwei Rädern (9) versehen ist, die drehbar an zwei separaten Achsen (12) derart angeordnet sind, daß die Räder (9) in einer V-Stellung sind und jeweils auf einer Seite einer vertikalen Ebene liegen, die durch die Mittellinie des Einspritzrohrs (1) derart verläuft, daß nahe den untersten Punkten der Räder die maximale Entfernung (a) zwischen den äußeren Kanten der Räder (9) bis zum Sechsfachen der Breite (b) des Einspritzrohres (1) in der betreffenden Richtung beträgt, um die Furche nur an ihrem oberen Ende (8) zu verschliessen.

2. Vorrichtung nach Anspruch 1, dadurch gekennzeichnet, daß die Räder (9) einen Winkel (a) von 30 bis 120° einschließen.

3. Vorrichtung nach Anspruch 1 oder 2, dadurch gekennzeichnet, daß in der Nähe der untersten Punkte der Räder (9) die maximale Entfernung (c) zwischen den inneren Kanten (11) der Räder (9) von 0 bis zum Sechsfachen der Breite (b) des Einspritzrohres (1) in der betreffenden Richtung beträgt.

4. Vorrichtung nach einem der voranstehenden Ansprüche, dadurch gekennzeichnet, daß die Räder (9) in Draufsicht einen Winkel (β) derart einschließen, daß sie sich in einer V-förmigen Position befinden, wobei die rückwärtigen Teile, vom Einspritzrohr her gesehen, im kleinsten Abstand voneinander sind.

5. Vorrichtung nach Anspruch 4, dadurch gekennzeichnet, daß der Winkel (β), den die Räder (9) in Draufsicht einschließen, zwischen 0 und 40° liegt.

6. Vorrichtung nach Anspruch 4 oder 5, dadurch gekennzeichnet, daß die Achsen (12) der Räder (9) mit einem Bandeisen (13) verbunden sind, das bezüglich des Schwingarms (15) einstellbar ist und in einer vertikalen Ebene fixiert werden kann.

## Revendications

1. Dispositif pour faire entrer des liquides, notamment du fumier liquide par exemple, sous la surface (6) du sol (7), ledit dispositif comprenant au moins un tube d'injection (1) qui, pendant l'utilisation du dispositif, est placé sensiblement verticalement et est muni d'une plaque coupante (4) sensiblement horizontale ou d'un outil de ce type à son extrémité inférieure, ledit dispositif comprenant en outre un bras pivotant (15) dont une première extrémité est reliée de façon pivotante au tube d'injection (1) et dont l'autre extrémité est munie d'au moins une roue (9) placée à une certaine distance dudit tube d'injection (1) pour fermer le sillon formé par ledit tube d'injection (1), ledit bras étant chargé par ressort (19) de telle sorte que ladite roue est pressée verticalement vers le bas pendant le fonctionnement du dispositif, caractérisé en ce que ledit bras est muni de deux roues (9) qui sont montées de manière rotative sur deux arbres séparés (12) de telle manière que lesdites roues (9) se trouvent dans une position en forme de V et sont présentes de chaque côté d'un plan vertical s'étendant à travers l'axe du tube d'injection (1) de sorte que, prés des points inférieurs des roues, la distance maximale (a) entre les bords extérieurs desdites roues (9) atteint six fois la largeur (b) du tube d'injection (1) dans la direction concernée de manière à fermer le sillon uniquement au niveau de son extrémité supérieure (8).

2. Dispositif selon la revendication 1, caractérise en ce que les roues (9) forment un angle (α) compris entre 30° et 120°.

3. Dispositif selon la revendication 1 ou 2, caractérisé en ce que, près des points inférieurs des roues (9), la distance maximale (c) entre les bords intérieurs (11) desdites roues (9) est de zéro à quatre fois la largeur (b) du tube d'injection (1) dans la direction concernée.

4. Dispositif selon l'une quelconque des précédentes revendications, caractérisé en ce que les roues (9), vues en plan, forment un angle (β) de telle sorte qu'elles sont dans une position en forme de V, les parties arrières, vues depuis le tube d'injection, étant à la plus courte distance l'une de l'autre.

5. Dispositif selon la revendication 4, caractérisé en ce que l'angle (β) qui, vu en plan, est formé par les roues (9), est compris entre 0° et 40°.

6. Dispositif selon la revendication 4 ou 5, caractérisé en ce que les arbres (12) des roues (9) sont reliés à une bande (13) qui, par rapport au bras pivotant (15), est réglable et peut être fixée dans un plan vertical.
